(19) Europäisches Patentamt
European Patent Office
Office européen des brevets

(11) **EP 4 105 895 A2**

(12) **EUROPEAN PATENT APPLICATION**

(43) Date of publication:
**21.12.2022 Bulletin 2022/51**

(21) Application number: **22204575.9**

(22) Date of filing: **28.10.2022**

(51) International Patent Classification (IPC):
*G06V 10/82* (2022.01)      *G06V 40/20* (2022.01)

(52) Cooperative Patent Classification (CPC):
**G06V 10/82; G06V 40/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021   CN 202111275690**

(71) Applicant: **Beijing Baidu Netcom
Science Technology Co., Ltd.
Beijing 100085 (CN)**

(72) Inventors:
• **ZHOU, Desen**
  **Beijing, 100085 (CN)**
• **WANG, Jian**
  **Beijing, 100085 (CN)**
• **SUN, Hao**
  **Beijing, 100085 (CN)**

(74) Representative: **Isarpatent
Patent- und Rechtsanwälte Barth
Charles Hassa Peckmann & Partner mbB
Friedrichstrasse 31
80801 München (DE)**

(54) **HUMAN-OBJECT INTERACTION DETECTION METHOD, NEURAL NETWORK AND TRAINING METHOD THEREFOR, DEVICE, AND MEDIUM**

(57)    The present disclosure provides a human-object interaction detection method, a neural network and a training method therefor, a device, and a medium, and relates to the field of artificial intelligence, and specifically to computer vision technologies and deep learning technologies. The method includes: performing first target feature extraction on an image feature of an image to be detected; performing first interaction feature extraction on the image feature; processing a plurality of first target features to obtain target information of a plurality of detected targets; processing one or more first interaction features to obtain motion information of a motion, human information of a human target corresponding to each motion, and object information of an object target corresponding to each motion; matching the plurality of detected targets with one or more motions; and updating human information of a corresponding human target based on target information of a detected target matching the corresponding human target, and updating object information of a corresponding object target based on target information of a detected target matching the corresponding object target.

200

| | |
|---|---|
| Obtain an image feature of an image to be detected | S201 |
| Perform first target feature extraction on the image feature to obtain a plurality of first target features | S202 |
| Perform first interaction feature extraction on the image feature to obtain one or more first interaction features | S203 |
| Process the plurality of first target features to obtain target information of a plurality of detected targets in the image to be detected | S204 |
| Process the one or more first interaction features to obtain motion information of one or more motions in the image to be detected, human information of a human target corresponding to each of the one or more motions, and object information of an object target corresponding to each motion | S205 |
| Match the plurality of detected targets with the one or more motions | S206 |
| For each of the one or more motions, update human information of a corresponding human target based on target information of a detected target matching the corresponding human target, and update object information of a corresponding object target based on target information of a detected target matching the corresponding object target | S207 |

Fig. 2

EP 4 105 895 A2

**Description**

**TECHNICAL FIELD**

The present disclosure relates to the field of artificial intelligence, specifically to computer vision technologies and deep learning technologies, and in particular to a human-object interaction detection method, a training method for a neural network for human-object interaction detection, a neural network for human-object interaction detection, an electronic device, a computer-readable storage medium, and a computer program product.

**BACKGROUND**

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

In an image human-object interaction detection task, it is required to simultaneously detect a human, an object, and an interaction between the two, pair a human and an object that have an interaction in an image, and output a triplet <human, object, motion>. In the task, it is required to perform target detection and simultaneously classify human motions, which is very challenging when objects and humans in the image crowd. Human-object interaction detection can be applied to the fields of video monitoring and the like to monitor human behaviors.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

**SUMMARY**

The present disclosure provides a human-object interaction detection method, a training method for a neural network for human-object interaction detection, a neural network for human-object interaction detection, an electronic device, a computer-readable storage medium, and a computer program product.

According to an aspect of the present disclosure, there is provided a computer-implemented human-object interaction detection method, including: obtaining an image feature of an image to be detected; performing first target feature extraction on the image feature to obtain a plurality of first target features; performing first interaction feature extraction on the image feature to obtain one or more first interaction features; processing the plurality of first target features to obtain target information of a plurality of detected targets in the image to be detected, where the plurality of detected targets include one or more human targets and one or more object targets; processing the one or more first interaction features to obtain motion information of one or more motions in the image to be detected, human information of a human target corresponding to each motion of the one or more motions, and object information of an object target corresponding to each motion of the one or more motions; matching the plurality of detected targets with the one or more motions; and for each motion of the one or more motions, updating human information of a corresponding human target of the one or more human targets based on target information of a detected target matching the corresponding human target, and updating object information of a corresponding object target of the one or more object targets based on target information of a detected target matching the corresponding object target.

According to another aspect of the present disclosure, there is provided a computer-implemented training method for a neural network for human-object interaction detection. The neural network includes an image feature extraction sub-network, a first target feature extraction sub-network, a first interaction feature extraction sub-network, a target detection sub-network, a motion recognition sub-network, a matching sub-network, and an updating sub-network. The training method includes: obtaining a sample image and a ground truth human-object interaction label of the sample image; inputting the sample image to the image feature extraction sub-network to obtain a sample image feature; inputting the sample image feature to the first target feature extraction sub-network to obtain a plurality of first target features; inputting the sample image feature to the first interaction feature extraction sub-network to obtain one or more first interaction features; inputting the plurality of first target features to the target detection sub-network, where the target detection sub-network is configured to receive the plurality of first target features to output target information of a plurality of predicted targets in the sample image, where the plurality of predicted targets include one or more predicted human targets and one or more predicted object targets; inputting the one or more first interaction features to the motion recognition sub-network, where the motion recognition sub-network is configured to receive the one or more first interaction features to output motion information of one or more predicted motions in the sample image, where each predicted motion of the one or more predicted motions is associated with one of the one or more predicted human targets, and one of the one or more predicted object targets; inputting the plurality of predicted targets and the one or more predicted motions to the matching sub-network to obtain a matching result; inputting the matching result to the updating sub-network to obtain a predicted human-object interaction label, where the updating sub-network is configured to: for each predicted motion of the one or more predicted motions, update human information of a corresponding predicted human target of the one or more predicted human targets based on target information of a predicted target matching the corresponding predicted human target, and update object information of a corresponding predicted object target of the one or more predicted object targets based on target information of a predicted target matching the corresponding predicted object target; calculating a loss value based on the predicted human-object interaction label and the ground truth human-object interaction label; and adjusting a parameter of the neural network based on the loss value.

According to another aspect of the present disclosure, there is provided a neural network for human-object interaction detection, the neural network including: an image feature extraction sub-network configured to receive an image to be detected to output an image feature of the image to be detected; a first target feature extraction sub-network configured to receive the image feature to output a plurality of first target features; a first interaction feature extraction sub-network configured to receive the image feature to output one or more first interaction features; a target detection sub-network configured to receive the plurality of first target features to output target information of a plurality of predicted targets in the sample image; a motion recognition sub-network configured to receive the one or more first interaction features to output motion information of one or more predicted motions in the sample image; a matching sub-network configured to match the plurality of predicted targets with the one or more predicted motions; and an updating sub-network configured to: for each predicted motion of the one or more predicted motions, update human information of a corresponding human target based on target information of a predicted target matching the corresponding human target, and update object information of a corresponding object target based on target information of a predicted target matching the corresponding object target.

According to another aspect of the present disclosure, there is provided a non-transitory computer-readable storage medium storing computer instructions, where the computer instructions are used to cause a computer to perform the method described above.

According to another aspect of the present disclosure, there is provided a computer program product, including a computer program, where when the computer program is executed by a processor, the method described above is implemented.

According to one or more embodiments of the present disclosure, by separately predicting a boundary frame from a perspective of an object instance and from a perspective of an interaction instance, and fusing the two predictions through matching, the target information (including the human information and the object information) learned in the two manners may complement each other. Therefore, performance can be effectively improved.

It should be understood that the content described in this section is not intended to identify critical or important features of the embodiments of the present disclosure, and is not used to limit the scope of the present disclosure. Other features of the present disclosure will be easily understood through the following description.

## BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.

FIG. 1 is a schematic diagram of an exemplary system in which various methods described herein can be implemented according to an embodiment of the present disclosure;

FIG. 2 is a flowchart of a human-object interaction detection method according to an exemplary embodiment of the present disclosure;

FIG. 3 is a flowchart of a human-object interaction detection method according to an exemplary embodiment of the present disclosure;

FIG. 4 is a flowchart of matching a target with a motion according to an exemplary embodiment of the present disclosure;

FIG. 5 is a flowchart of a training method for a neural network for human-object interaction detection according to an exemplary embodiment of the present disclosure;

FIG. 6 is a structural block diagram of a neural network for human-object interaction detection according to an exemplary embodiment of the present disclosure; and

FIG. 7 is a structural block diagram of an exemplary electronic device that can be used to implement an embodiment of the present disclosure.

## DETAILED DESCRIPTION

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the related art, according to a human-object interaction detection method, a triplet is directly output using a one-stage method, according to another human-object interaction detection method, target detection and motion recognition are separately performed, and an obtained target is matched with an obtained motion. However, the former method has a poor interpretability, and it is difficult to obtain an accurate result, and the latter method lacks interaction between two subtasks of the target detection and the motion recognition, and it is easy to fall into a local optimal solution.

In order to solve the above problems, the present disclosure separately predicts a boundary frame from a perspective of an object instance and from a perspective of an interaction instance, and fuses the two predictions through matching, so that target information (including human information and object information) learned in the two manners may complement each other. Therefore, performance can be effectively improved.

In the present disclosure, a "sub-network" of a neural network does not necessarily have a neural network structure based on a layer composed of neurons. A "sub-network" may have another type of network structure, or may process data, features, and the like that are input to the sub-network using another processing method, which is not limited herein.

The embodiments of the present disclosure will be described below in detail with reference to the accompanying drawings.

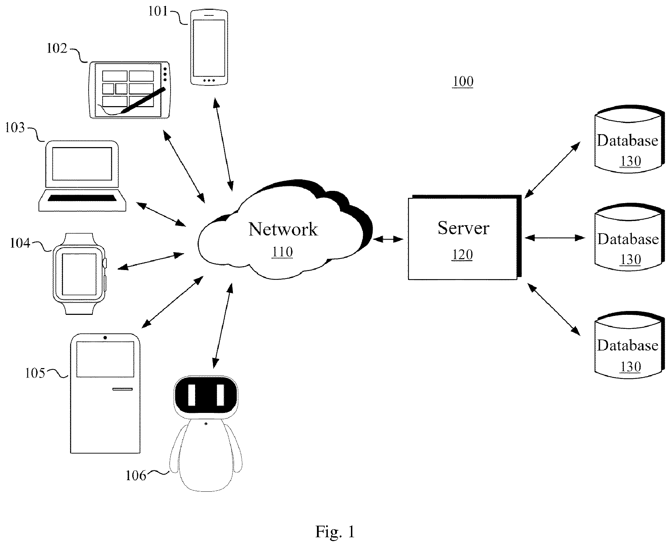

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more application programs.

In an embodiment of the present disclosure, the server 120 can run one or more services or software applications that enable a human-object interaction detection method to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, FIG. 1 is an example of the system for implementing various methods described herein, and is not intended to be limiting.

The user may input an image or a video for performing human-object interaction detection by using the client device 101, 102, 103, 104, 105, and/or 106. The client device may provide an interface that enables the user of the client device to interact with the client device. The client device may also output information to the user via the interface. Although FIG. 1 depicts only six types of client devices, those skilled in the art will understand that any number of client devices are possible in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client device 101, 102, 103, 104, 105, and/or 106. The server 120 may further include one or more application programs to display the data feeds and/or real-time events via one or more display devices of the client device 101, 102, 103, 104, 105, and/or 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The databases 130 may reside in various locations. For example, a database used by the server 120 may be locally in the server 120, or may be remote from the server 120 and may communicate with the server 120 via a network-based or dedicated connection. The databases 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of FIG. 1 may be configured and operated in various manners, such that the various methods and apparatuses described according to the present disclosure can be applied.

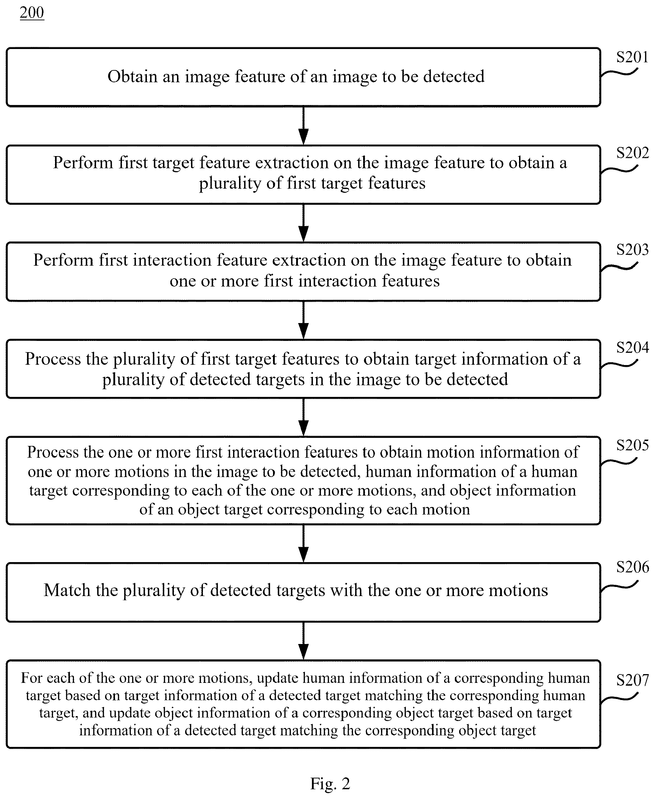

According to an aspect of the present disclosure, there is provided a human-object interaction detection method. As shown in FIG. 2, the method includes: step S201: obtaining an image feature of an image to be detected; step S202: performing first target feature extraction on the image feature to obtain a plurality of first target features; step S203: performing first interaction feature extraction on the image feature to obtain one or more first interaction features; step S204: processing the plurality of first target features to obtain target information of a plurality of detected targets in the image to be detected, where the plurality of detected targets include one or more human targets and one or more object targets; step S205: processing the one or more first interaction features to obtain motion information of one or more motions in the image to be detected, human information of a human target corresponding to each of the one or more motions, and object information of an object target corresponding to each motion; step S206: matching the plurality of detected targets with the one or more motions; and step S207: for each of the one or more motions, updating human information of a corresponding human target based on target information of a detected target matching the corresponding human target, and updating object information of a corresponding object target based on target information of a detected target matching the corresponding object target.

Thus, by separately predicting a boundary frame from a perspective of an object instance and from a perspective of an interaction instance, and fusing the two predictions through matching, the target information (including the human information and the object information) learned in the two manners may complement each other. Therefore, performance can be effectively improved.

According to some embodiments, the image to be detected may be, for example, any image that involves a human-object interaction. In some embodiments, the image to be detected may include a plurality of targets that include one or more human targets and one or more object targets. In addition, the image to be detected may further include one or more motions, and each motion is associated with one of the one or more human targets, and one of the one or more object targets.

In the present disclosure, the "motion" may be used to indicate an interaction between a human and an object, rather than a specific motion. The "motion" may further include a plurality of specific sub-motions. In an exemplary embodiment, the image to be detected includes a person holding a cup and drinking water, then there is a motion between a corresponding human (the person drinking water) and a corresponding object (the cup) in the image to be detected, and the motion includes two sub-motions "raise the cup" and "drink water". Thus, by recognizing a motion between a human and an object, it may be determined that there is an interaction between the human and the object, and then a corresponding motion feature may be analyzed to determine a specific sub-motion that occurs between the human and the object.

In some embodiments, the image feature of the image to be detected may be obtained, for example, based on an existing image feature extraction backbone network such as ResNet50 and ResNet101. In some embodiments, after the backbone network, a transformer encoder may be used to further extract an image feature. By using the above method, a single image feature corresponding to the image to be detected may be obtained, or a plurality of image features corresponding to the image to be detected may be obtained, which is not limited herein. In an exemplary embodiment, the image to be detected is processed by using the backbone network to obtain an image feature of a size of $H \times W \times C$ (i.e., a feature map), which is then expanded to obtain an image feature of a size of $C \times HW$ (i.e., HW one-dimensional image features with a length of C). These image features are input to the transformer encoder, and enhanced image features of the same size (i.e., the same number) may be obtained for further processing.

According to some embodiments, a pre-trained convolutional neural network may be used to process the image feature to obtain a first target feature for target detection. The first target feature may be further input to a pre-trained target detection sub-network to obtain a target included in the image to be detected and target information of the target.

According to some embodiments, a transformer decoder may be used to decode the image feature to obtain a decoded first target feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training.

According to some embodiments, step S202 of performing first target feature extraction on the plurality of image features to obtain a plurality of first target features may include: obtaining a plurality of pre-trained target-query features, i.e., features Q; and for each of the plurality of target-query features, determining a first target feature corresponding to the target-query feature based on a query result of the target-query feature for the plurality of image-key features and based on the plurality of image-value features. In some embodiments, a plurality of transformer decoders may also be cascaded to enhance the first target feature. Thus, by using the target-query features, the plurality of image-key features may be queried for image-value features that are more likely to include target information, and based on these image-value features, a plurality of first target features may be extracted.

Similarly, another pre-trained convolutional neural network may be used to process the image feature to obtain a first interaction feature including motion information. A motion recognition task may be performed on the first interaction feature to obtain a corresponding motion recognition result.

According to some embodiments, another transformer decoder may be used to decode the image feature to obtain a decoded first interaction feature. In some embodiments, the image feature includes a plurality of corresponding image-key features and a plurality of corresponding image-value features, i.e., features K and features V. The features K and the features V may be obtained, for example, by using a different set of parameter matrices $W_K$ and Wv to map the image feature, where $W_K$ and Wv are obtained by training. The parameter matrices used herein may be the same as or different from the parameter matrices used above for extracting the target feature, which is not limited herein.

According to some embodiments, step S202 of performing first target feature extraction on the image feature to obtain a plurality of first target features may include: obtaining a plurality of pre-trained target-query features; and for each of the plurality of target-query features, determining a first target feature corresponding to the target-query feature based on a query result of the target-query feature for the plurality of image-key features and based on the plurality of image-value features.

Therefore, by using the interaction-query features, the plurality of image-key features may be queried for image-value features that are more likely to include motion information. It should be noted that the features Q as the interaction-query features may be different from the features Q as the target-query features above. In some embodiments, a plurality of transformer decoders may also be cascaded to enhance the first interaction feature.

After being obtained, the first interaction feature and the first target feature may be processed separately to obtain motion information of at least one motion and target information of a plurality of detected targets in the image to be detected.

According to some embodiments, the target information may include, for example, a type of a corresponding target, a bounding box surrounding the corresponding target, and a confidence level. In some embodiments, step S204 of processing the plurality of target features may include, for example, using a multi-layer perceptron to regress a location, a classification class, and a corresponding confidence level of an object.

According to some embodiments, each of the one or more motions may include at least one sub-motion between a corresponding human target and a corresponding object target, and the motion information may include, for example, a type and a confidence level of each of the at least one sub-motion. The human information may include, for example, a bounding box surrounding a corresponding human and a confidence level, and the object information may include, for example, a type of an object, a bounding box surrounding a corresponding object, and a confidence level. In some embodiments, step S205 of processing the one or more interaction features may include, for example, processing each interaction feature by using a perceptron to obtain the motion information of the one or more motions in the image to be detected, the human information of the human target corresponding to each of the one or more motions, and the object information of the object target corresponding to each motion.

According to some embodiments, the interaction feature may be processed by using a multi-layer perceptron to obtain a triplet $< b_j^h, b_j^o, a_j >$ including the human information, the object information, and the motion information, where $b_j^h$ and $b_j^o$ are denoted as a predicted second human bounding box and a predicted second object bounding box, and $a_j$ is a predicted motion probability. In an exemplary embodiment, $a_j$ may be a vector including motion probabilities of a plurality of sub-motions.

It can be understood that those skilled in the art may select a corresponding target detection method and a corresponding human-object interaction detection method by themselves to process the target feature and the interaction feature to obtain a desired target detection result and human-object interaction detection result, which is not limited herein.

According to some embodiments, step S206 of matching the plurality of detected targets with the one or more motions may be performed, for example, by calculating a similarity between target features corresponding to the plurality of targets and interaction features corresponding to one or more motions, or by calculating a similarity between a corresponding target feature and a corresponding interaction feature, or may be performed based on another manner, which is not limited herein.

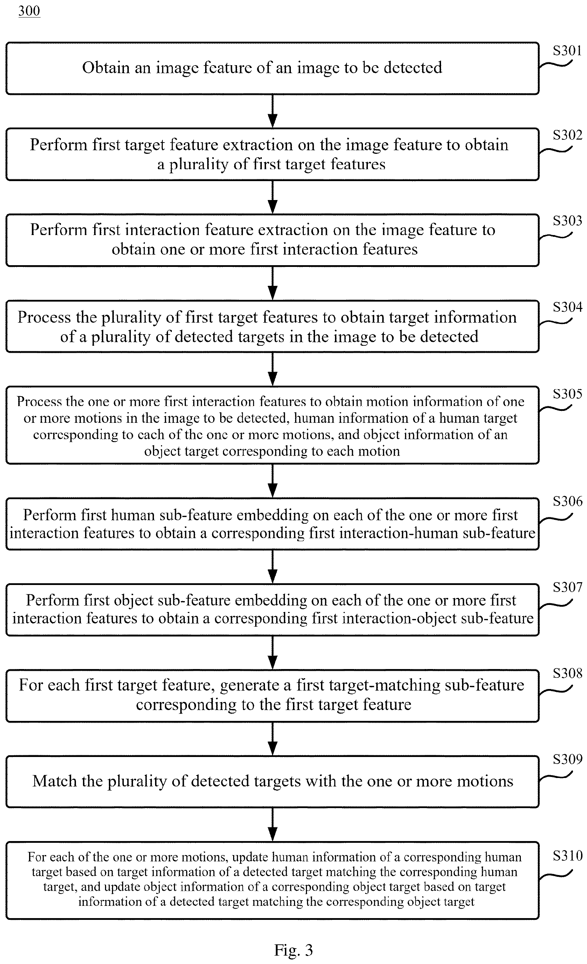

According to some embodiments, as shown in FIG. 3, the human-object interaction detection method may further include: step S306: performing first human sub-feature embedding on each of the one or more first interaction features to obtain a corresponding first interaction-human sub-feature; and step S307: performing first object sub-feature embedding on each of the one or more first interaction features to obtain a corresponding first interaction-object sub-feature. Operations of step S301 to step S305 and operations of step S309 and step S310 in FIG. 3 are respectively similar to those of step S201 to step S207 in FIG. 2. Details are not described herein again.

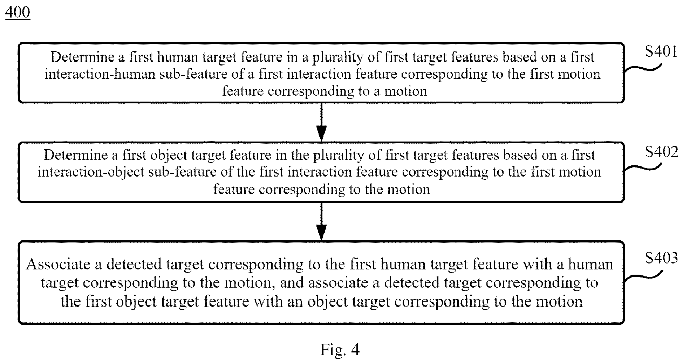

According to some embodiments, as shown in FIG. 4, step S309 of matching the plurality of detected targets with the one or more motions may include: step S401: for each of the one or more motions, determining a first human target feature in the plurality of first target features based on a first interaction-human sub-feature of a first interaction feature corresponding to the first motion feature corresponding to the motion; step S402: determining a first object target feature in the plurality of first target features based on a first interaction-object sub-feature of the first interaction feature corresponding to the first motion feature corresponding to the motion; and step S403: associating a detected target corresponding to the first human target feature with a human target corresponding to the motion, and associating a detected target corresponding to the first object target feature with an object target corresponding to the motion.

Thus, an interaction feature is embedded to obtain a human sub-feature and an object sub-feature, a target most related to the human sub-feature is determined as a corresponding human target, and a target most related to the object sub-feature is determined as a corresponding object target, so as to match an interaction feature with the target.

According to some embodiments, the first human sub-feature embedding and the first object sub-feature embedding each may be implemented, for example, by using a multi-layer perceptron (MLP), but the two embeddings use different parameters. The first interaction-human sub-feature may be represented as, for example, $e_i^h \in R^d$, the first interaction-object sub-feature may be represented as, for example, $e_i^o \in R^d$, where d is a length of a feature vector, and i represents each motion feature. It should be noted that feature vectors of the two sub-features have the same length.

According to some embodiments, as shown in FIG. 3, the human-object interaction detection method may further include: step S308: for each first target feature, generating a first target-matching sub-feature corresponding to the first target feature. Step S401 of determining a first human target feature in the plurality of first target features may include: determining the first human target feature in a plurality of first target-matching sub-features corresponding to the plurality of first target features based on the first interaction-human sub-feature of the first interaction feature corresponding to the first motion feature corresponding to the motion. Step S402 of determining a first object target feature in the plurality of first target features may include: determining the first object target feature in the plurality of first target-matching sub-features corresponding to the plurality of first target features based on the first interaction-object sub-feature of the first interaction feature corresponding to the first motion feature corresponding to the motion.

Thus, a target feature is embedded to obtain a matching sub-feature to match a human sub-feature and an object sub-feature, such that a target detection task and a task of matching the target with the motion use different feature vectors, to avoid interference to improve the accuracy of the two tasks.

According to some embodiments, for each first target feature, a first target-matching sub-feature corresponding to the first target feature may also be generated by using the multi-layer perceptron (MLP) for embedding, but parameters used herein are different from the parameters used for the first human sub-feature embedding and the first object sub-feature embedding. In an exemplary embodiment, the first target-matching sub-feature may be represented as $\mu_j \in R^d$, where d is a length of a feature vector, j represents each target feature, and the matching sub-feature, the above human sub-feature, and the above object sub-feature have the same length.

In an exemplary embodiment, determination processes of step S401 and step S402 may be expressed by the following formulas:

$$c_i^h = argmax_j (e_i^h)^T \mu_j$$

$$c_i^o = argmax_j (e_i^o)^T \mu_j$$

Here, $c_i^h$ and $c_i^o$ are a target corresponding to the human sub-feature determined based on the first interaction feature and a target corresponding to the object sub-feature determined based on the first interaction feature.

According to some embodiments, the updating human information of a corresponding human target based on target information of a detected target matching the corresponding human target may include: determining an updated third human bounding box surrounding the corresponding human target based on a first human bounding box surrounding the detected target matching the corresponding human target and a second human bounding box surrounding the corresponding human target. The updating object information of a corresponding object target based on target information of a detected target matching the corresponding object target may include: determining an updated third object bounding box surrounding the corresponding object target based on a first object bounding box surrounding the detected target matching the corresponding object target and a second object bounding box surrounding the corresponding object target.

Thus, the updated human bounding box is determined based on the bounding box obtained after a target feature is matched and based on the bounding box corresponding to the human target obtained based on the interaction feature, and the updated object bounding box is determined based on the bounding box obtained after a target feature is matched and based on the bounding box corresponding to the object target based on the interaction feature, the accuracy of the human bounding box and the object bounding box is improved.

According to some embodiments, the target information, the human information, and the object information each include at least one of size information, shape information, and location information that are of a corresponding bounding box. In some embodiments, an update of the bounding box may be, for example, an update of a location of the bounding box, an update of a size of the bounding box, an update of a shape of the bounding box, or any combination of the above update manners, which is not limited herein.

According to some embodiments, the motion information includes a type and a confidence level of each of the at least one sub-motion. In some embodiments, the third human bounding box may be determined based on the first human bounding box and the confidence level of the detected target matching the corresponding human target and based on the second human bounding box and confidence levels of at least some sub-motions of at least one sub-motion that is included in the motion. In some embodiments, the third object bounding box may be determined based on the first object bounding box and the confidence level of the detected target matching the corresponding object target and based on the second object bounding box and the confidence levels of the at least some sub-motions. Thus, by selecting at least some sub-motions from at least one sub-motion included in a human-object interaction, and performing bounding box fusion based on confidence levels of these sub-motions, noise interference can be reduced and the accuracy of the updated bounding box can be improved.

According to some embodiments, the at least some sub-motions may include at least one of the following: a predetermined number of sub-motions with the highest confidence level in the at least one sub-motion; a predetermined proportion of sub-motions with the highest confidence level in the at least one sub-motion; and a sub-motion with a confidence level exceeding a predetermined threshold in the at least one sub-motion. Thus, by using the confidence level of at least some sub-motions with the highest confidence level as a confidence level used for bounding box fusion calculation, the noise interference can be further reduced, and the accuracy of the updated bounding box can be further improved. In an exemplary embodiment, bounding box fusion may be performed based on the confidence level of the sub-motion with the highest confidence level and based on a corresponding second object bounding box.

According to some embodiments, the determining a third human bounding box based on a first human bounding box and a second human bounding box may include: determining the third human bounding box based on the first human bounding box and a confidence level of the detected target matching the corresponding human target and based on the second human bounding box and a confidence level of the motion. The determining the third object bounding box based on the first object bounding box and the second object bounding box may include: determining the third object bounding box based on the first object bounding box and a confidence level of the detected target matching the corresponding object target and based on the second object bounding box and the confidence level of the motion. Thus, by using the confidence level of the corresponding motion and a confidence level of a corresponding target detection result, the accuracy of the updated bounding box can be further improved.

According to some embodiments, the determining the third human bounding box based on the first human bounding box and a confidence level of the detected target matching the corresponding human target and based on the second human bounding box and a confidence level of the corresponding human target may include: using the confidence level of the detected target matching the corresponding human target as a weight of the first human bounding box, and using the confidence level of the motion as a weight of the second human bounding box to determine the third human bounding box. The determining the third object bounding box based on the first object bounding box and a confidence level of the detected target matching the corresponding object target and based on the second object bounding box and a confidence level of the corresponding object target may include: using the confidence level of the detected target matching the corresponding object target as a weight of the first object bounding box and using the confidence level of the motion as a weight of the second object bounding box, to determine the third object bounding box. Thus, by using a confidence level of a corresponding motion and a confidence level of a target detection result as a weight to update the bounding box, the accuracy of the updated bounding box can be further improved.

In an exemplary embodiment, it is assumed that the first human bounding box obtained based on target detection is $B_{c_j^h}$, the first object bounding box obtained based on the target detection is $B_{c_j^o}$, and confidence levels corresponding to the two are $s_{c_j^h}$ and $s_{c_j^o}$. Then the updated third human bounding box $b_j'^h$ and the updated third object bounding box $b_j'^o$ may be:

$$b_j'^h = (b_j^h * max(a_j) + B_{c_j^h} * s_{c_j^h})/(max(a_j) + s_{c_j^h}))$$

$$b_j'^o = (b_j^o * max(a_j) + B_{c_j^o} * s_{c_j^o})/(max(a_j) + s_{c_j^o}))$$

Here, $max(a_j)$ represents a confidence level of a sub-motion with the highest confidence level in sub-motions included in $a_j$.

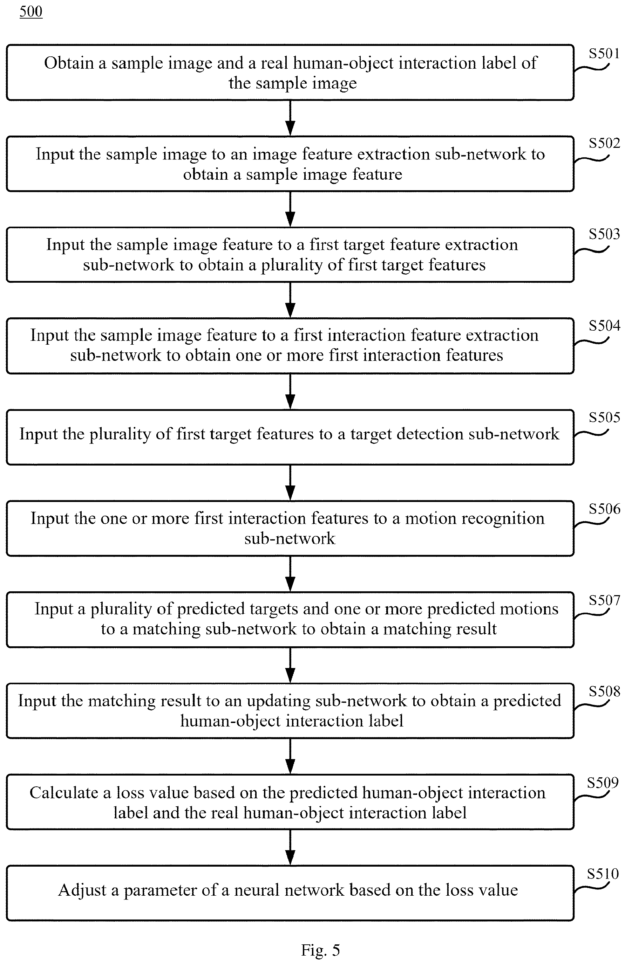

According to another aspect of the present disclosure, there is provided a training method for a neural network for human-object interaction detection. The neural network includes an image feature extraction sub-network, a first target feature extraction sub-network, a first interaction feature extraction sub-network, a target detection sub-network, a motion recognition sub-network, a matching sub-network, and an updating sub-network. As shown in FIG. 5, the training method includes: step S501: obtaining a sample image and a ground truth human-object interaction label of the sample image; step S502: inputting the sample image to the image feature extraction sub-network to obtain a sample image feature; step S503: inputting the sample image feature to the first target feature extraction sub-network to obtain a plurality of first target features; step S504: inputting the sample image feature to the first interaction feature extraction sub-network to obtain one or more first interaction features; step S505: inputting the plurality of first target features to the target detection sub-network, where the target detection sub-network is configured to receive the plurality of first target features to output target information of a plurality of predicted targets in the sample image, where the plurality of predicted targets include one or more predicted human targets and one or more predicted object targets; step S506: inputting the one or more first interaction features to the motion recognition sub-network, where the motion recognition sub-network is configured to receive the one or more first interaction features to output motion information of one or more predicted motions in the sample image, where each of the one or more predicted motions is associated with one of the one or more predicted human targets, and one of the one or more predicted object targets; step S507: inputting the plurality of predicted targets and the one or more predicted motions to the matching sub-network to obtain a matching result; step S508: inputting the matching result to the updating sub-network to obtain a predicted human-object interaction label, where the updating sub-network is configured to: for each of the one or more predicted motions, update human information of a corresponding human target based on target information of a predicted target matching the corresponding human target, and update object information of a corresponding object target based on target information of a predicted target matching the corresponding object target, so as to obtain the predicted human-object interaction label; step S509: calculating a loss value based on the predicted human-object interaction label and the ground truth human-object interaction label; and step S510: adjusting a parameter of the neural network based on the loss value. It can be understood that operations on the sample image in step S502 to step S508 in FIG. 5 are similar to operations on the image to be detected in step S201 to step S207 in FIG. 2, and the operations of each of step S201 to step S207 may be implemented by a neural network or a sub-neural network having a corresponding function. Therefore, these steps in FIG. 5 are not described herein again.

Thus, by separately predicting a boundary frame from a perspective of an object instance and from a perspective of an interaction instance, and fusing the two predictions through matching, the target information (including the human information and the object information) learned in the two manners may complement each other. Therefore, performance of a trained neural network can be effectively improved.

According to some embodiments, after the predicted human-object interaction label is obtained, the loss value may be calculated based on the predicted human-object interaction label and the ground truth human-object interaction label, and the parameter of each sub-network in the neural network described above may be further adjusted based on the loss value. In some embodiments, a plurality of batches and rounds of training may be performed using a plurality of samples until the neural network converges. In some embodiments, some of sub-networks in the neural network may be pre-trained, individually trained, or trained in combination to optimize an overall training process. It can be understood that those skilled in the art may further use another method to train the neural network and a sub-network thereof, which is not limited herein.

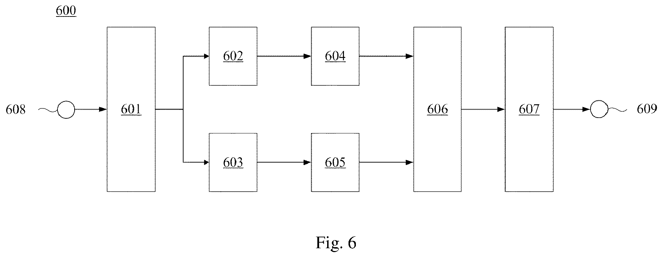

According to another aspect of the present disclosure, there is provided a neural network for human-object interaction detection. As shown in FIG. 6, a neural network 600 includes: an image feature extraction sub-network 601 configured to receive an image 608 to be detected to output an image feature of the image to be detected; a first target feature extraction sub-network 602 configured to receive the image feature to output a plurality of first target features; a first interaction feature extraction sub-network 603 configured to receive the image feature to output one or more first interaction features; a target detection sub-network 604 configured to receive the plurality of first target features to output target information of a plurality of predicted targets in the sample image; a motion recognition sub-network 605 configured to receive the one or more first interaction features to output motion information of one or more predicted motions in the sample image; a matching sub-network 606 configured to match the plurality of predicted targets with the one or more predicted motions; and an updating sub-network 607 configured to: for each of the one or more predicted motions, update human information of a corresponding human target based on target information of a predicted target matching the corresponding human target, update object information of a corresponding object target based on target information of a predicted target matching the corresponding object target, and output a human-object interaction detection result 609 including the motion information, the updated human information, and the updated object information. It can be understood that operations of the sub-network 601 to the sub-network 607 in the neural network 600 are similar to those of step S201 to step S207 in FIG. 2. Details are not described herein again.

Thus, by separately predicting a boundary frame from a perspective of an object instance and from a perspective of an interaction instance, and fusing the two predictions through matching, the target information (including the human information and the object information) learned in the two manners may complement each other. Therefore, performance of a trained neural network can be effectively improved.

According to the embodiments of the present disclosure, there are further provided an electronic device, a readable storage medium, and a computer program product.

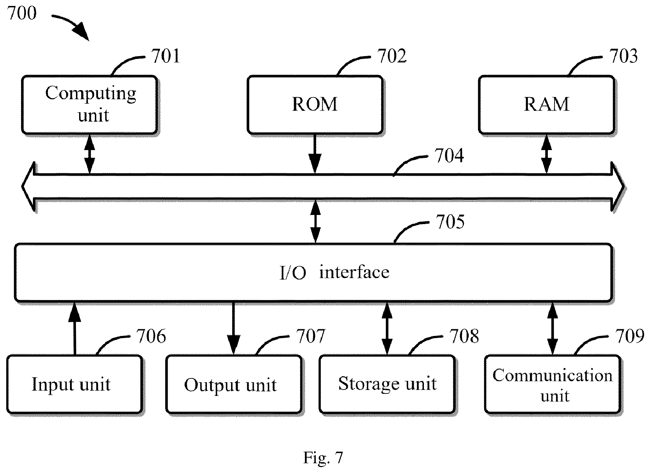

Referring to FIG. 7, a structural block diagram of an electronic device 700 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 7, the device 700 includes a computing unit 701, which may perform various appropriate actions and processing according to a computer program stored in a read-only memory (ROM) 702 or a computer program loaded from a storage unit 708 to a random access memory (RAM) 703. The RAM 703 may further store various programs and data required for the operation of the device 700. The computing unit 701, the ROM 702, and the RAM 703 are connected to each other through a bus 704. An input/output (I/O) interface 705 is also connected to the bus 704.

A plurality of components in the device 700 are connected to the I/O interface 705, including: an input unit 706, an output unit 707, the storage unit 708, and a communication unit 709. The input unit 706 may be any type of device capable of entering information to the device 700. The input unit 706 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 707 may be any type of device capable of presenting information, and may include, but is not limited to, a display, a speaker, a video/audio output terminal, a vibrator, and/or a printer. The storage unit 708 may include, but is not limited to, a magnetic disk and an optical disc. The communication unit 709 allows the device 700 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth™ device, an 802.11 device, a Wi-Fi device, a WiMAX device, a cellular communication device, and/or the like.

The computing unit 701 may be various general-purpose and/or special-purpose processing components with processing and computing capabilities. Some examples of the computing unit 701 include, but are not limited to, a central processing unit (CPU), a graphics processing unit (GPU), various dedicated artificial intelligence (AI) computing chips, various computing units that run machine learning network algorithms, a digital signal processor (DSP), and any appropriate processor, controller, microcontroller, etc. The computing unit 701 performs the various methods and processing described above, for example, the human-object interaction detection method and the training method for a neural network. For example, in some embodiments, the method for processing human-object interaction detection and the training method for a neural network may be each implemented as a computer software program, which is tangibly contained in a machine-readable medium, such as the storage unit 708. In some embodiments, a part or all of the computer program may be loaded and/or installed onto the device 700 via the ROM 702 and/or the communication unit 709. When the computer program is loaded onto the RAM 703 and executed by the computing unit 701, one or more steps of the human-object interaction detection method and the training method for a neural network described above can be performed. Alternatively, in other embodiments, the computing unit 701 may be configured, by any other suitable means (for example, by means of firmware), to perform the method for processing human-object interaction detection and the training method for a neural network.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including one or more programmable processors. The programmable processor may be a dedicated or general-purpose programmable processor that can receive data and instructions from a storage system, one or more input apparatuses, and one or more output apparatuses, and transmit data and instructions to the storage system, the one or more input apparatuses, and the one or more output apparatuses.

Program codes used to implement the method of the present disclosure can be written in any combination of

**EP 4 105 895 A2**

one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1.   A human-object interaction detection method, the method comprising:

     obtaining (S201) an image feature of an image to be detected;
     performing (S202) first target feature extraction on the image feature to obtain a plurality of first target features;

12

performing (S203) first interaction feature extraction on the image feature to obtain one or more first interaction features;

processing (S204) the plurality of first target features to obtain target information of a plurality of detected targets in the image to be detected, wherein the plurality of detected targets comprise one or more human targets and one or more object targets;

processing (S205) the one or more first interaction features to obtain motion information of one or more motions in the image to be detected, human information of a human target corresponding to each motion of the one or more motions, and object information of an object target corresponding to each motion of the one or more motions;

matching (S206) the plurality of detected targets with the one or more motions; and

for each motion of the one or more motions, updating (S207) human information of a corresponding human target based on target information of a detected target matching the corresponding human target, and updating object information of a corresponding object target based on target information of a detected target matching the corresponding object target.

2. The method according to claim 1, wherein the target information comprises a bounding box surrounding a corresponding target, the human information comprises a bounding box surrounding a corresponding human target, and the object information comprises a bounding box surrounding a corresponding object target,

wherein for each motion of the one or more motions, updating human information of a corresponding human target based on target information of a detected target matching the corresponding human target comprises:

for each motion of the one or more motions, determining an updated third human bounding box surrounding a corresponding human target based on a first human bounding box surrounding a detected target matching the corresponding human target and a second human bounding box surrounding the corresponding human target, and

wherein for each motion of the one or more motions, updating object information of a corresponding object target based on target information of a detected target matching the corresponding object target comprises:

for each motion of the one or more motions, determining an updated third object bounding box surrounding a corresponding object target based on a first object bounding box surrounding a detected target matching the corresponding object target and a second object bounding box surrounding the corresponding object target.

3. The method according to claim 2, wherein the target information comprises a confidence level, and the motion information comprises a confidence level,

wherein for each motion of the one or more motions, determining the updated third human bounding box surrounding the corresponding human target based on the first human bounding box surrounding the detected target matching the corresponding human target and the second human bounding box surrounding the corresponding human target comprises:

for each motion of the one or more motions, determining the third human bounding box based on the first human bounding box and a confidence level of the detected target matching the corresponding human target and based on the second human bounding box and a confidence level of the motion, and

wherein for each motion of the one or more motions, determining the updated third object bounding box surrounding the corresponding object target based on the first object bounding box surrounding the detected target matching the corresponding object target and the second object bounding box surrounding the corresponding object target comprises:

for each motion of the one or more motions, determining the third object bounding box based on the first object bounding box and a confidence level of the detected target matching the corresponding object target and based on the second object bounding box and the confidence level of the motion.

4. The method according to claim 3, wherein for each motion of the one or more motions, determining the third human bounding box based on the first human bounding box and a confidence level of the detected target matching the corresponding human target and based on the second human bounding box and a confidence level of the motion comprises:

using the confidence level of the detected target matching the corresponding human target as a weight of the first human bounding box, and using the confidence level of the motion as a weight of the second human bounding box to determine the third human bounding box, and

wherein for each motion of the one or more motions, determining the third object bounding box based on the first object bounding box and a confidence level of the detected target matching the corresponding object target and based on the second object bounding box and a confidence level of the motion comprises:
using the confidence level of the detected target matching the corresponding object target as a weight of the first object bounding box and using the confidence level of the motion as a weight of the second object bounding box, to determine the third object bounding box.

5. The method according to claim 3, wherein each motion of the one or more motions comprises at least one sub-motion between a corresponding human target and a corresponding object target, and wherein the motion information comprises a type and a confidence level of each sub-motion of the at least one sub-motion,

> wherein the third human bounding box is determined based on the first human bounding box and the confidence level of the detected target matching the corresponding human target and based on the second human bounding box and confidence levels of at least some sub-motions of at least one sub-motion that is comprised in the motion, and
> wherein the third object bounding box is determined based on the first object bounding box and the confidence level of the detected target matching the corresponding object target and based on the second object bounding box and the confidence levels of the at least some sub-motions.

6. The method according to claim 5, wherein the at least some sub-motions comprise at least one of the following:

> a predetermined number of sub-motions with the highest confidence level in the at least one sub-motion;
> a predetermined proportion of sub-motions with the highest confidence level in the at least one sub-motion; and
> a sub-motion with a confidence level exceeding a predetermined threshold in the at least one sub-motion.

7. The method according to claim 2, wherein each of the target information, the human information, and the object information comprises at least one of size information of a corresponding bounding box, shape information of a corresponding bounding box, and location information of a corresponding bounding box.

8. The method according to claim 1, further comprising:

> performing first human sub-feature embedding on each first interaction feature of the one or more first interaction features to obtain a corresponding first interaction-human sub-feature; and
> performing first object sub-feature embedding on each first interaction feature of the one or more first interaction features to obtain a corresponding first interaction-object sub-feature,
> wherein the matching the plurality of detected targets with the one or more motions comprises:
> for each motion of the one or more motions,

>> determining a first human target feature in the plurality of first target features based on a first interaction-human sub-feature of a first interaction feature corresponding to the motion;
>> determining a first object target feature in the plurality of first target features based on a first interaction-object sub-feature of the first interaction feature corresponding to the motion; and
>> associating a detected target corresponding to the first human target feature with a human target corresponding to the motion, and associating a detected target corresponding to the first object target feature with an object target corresponding to the motion.

9. The method according to claim 8, further comprising:

> for each first target feature of a plurality of first target features, generating a first target-matching sub-feature corresponding to the first target feature,
> wherein for each motion of the one or more motions, determining a first human target feature in the plurality of first target features based on a first interaction-human sub-feature of a first interaction feature corresponding to the motion comprises:

>> for each motion of the one or more motions, determining the first human target feature in a plurality of first target-matching sub-features corresponding to the plurality of first target features based on the first interaction-human sub-feature of the first interaction feature corresponding to the motion, and
>> wherein for each motion of the one or more motions, determining a first object target feature in the plurality of first target features based on a first interaction-object sub-feature of the first interaction feature corresponding to the motion comprises:

for each motion of the one or more motions, determining the first object target feature in the plurality of first target-matching sub-features corresponding to the plurality of first target features based on the first interaction-object sub-feature of the first interaction feature corresponding to a first motion feature corresponding to the motion.

10. The method according to claim 1, wherein the image feature comprises a plurality of image-key features and a plurality of image-value features corresponding to the plurality of image-key features,
wherein the performing first interaction feature extraction on the image feature to obtain one or more first interaction features comprises:

obtaining one or more pre-trained interaction-query features; and
for each pre-trained interaction-query feature of the one or more pre-trained interaction-query features, determining a first interaction feature corresponding to the pre-trained interaction-query feature based on a query result of the pre-trained interaction-query feature for the plurality of image-key features and based on the plurality of image-value features.

11. The method according to claim 1, wherein the image feature comprises a plurality of image-key features and a plurality of image-value features corresponding to the plurality of image-key features, and
wherein the performing first target feature extraction on the image feature to obtain a plurality of first target features comprises:

obtaining a plurality of pre-trained target-query features; and
for each pre-trained target-query feature of the plurality of pre-trained target-query features, determining a first target feature corresponding to the pre-trained target-query feature based on a query result of the pre-trained target-query feature for the plurality of image-key features and based on the plurality of image-value features.

12. A computer-implemented training method for a neural network for human-object interaction detection, wherein the neural network comprises an image feature extraction sub-network, a first target feature extraction sub-network, a first interaction feature extraction sub-network, a target detection sub-network, a motion recognition sub-network, a matching sub-network, and an updating sub-network, and the method comprises:

obtaining (S501) a sample image and a ground truth human-object interaction label of the sample image;
inputting (S502) the sample image to the image feature extraction sub-network to obtain a sample image feature;
inputting (S503) the sample image feature to the first target feature extraction sub-network to obtain a plurality of first target features;
inputting (S504) the sample image feature to the first interaction feature extraction sub-network to obtain one or more first interaction features;
inputting (S505) the plurality of first target features to the target detection sub-network, wherein the target detection sub-network is configured to receive the plurality of first target features to output target information of a plurality of predicted targets in the sample image, wherein the plurality of predicted targets comprise one or more predicted human targets and one or more predicted object targets;
inputting (S506) the one or more first interaction features to the motion recognition sub-network, wherein the motion recognition sub-network is configured to receive the one or more first interaction features to output motion information of one or more predicted motions in the sample image, wherein each predicted motion of the one or more predicted motions is associated with one of the one or more predicted human targets, and one of the one or more predicted object targets;
inputting (S507) the plurality of predicted targets and the one or more predicted motions to the matching sub-network to obtain a matching result;
inputting (S508) the matching result to the updating sub-network to obtain a predicted human-object interaction label, wherein the updating sub-network is configured to: for each predicted motion of the one or more predicted motions, update human information of a corresponding human target based on target information of a predicted target matching the corresponding human target, and update object information of a corresponding object target based on target information of a predicted target matching the corresponding object target;
calculating (S509) a loss value based on the predicted human-object interaction label and the ground truth human-object interaction label; and
adjusting (S510) a parameter of the neural network based on the loss value.

13. A neural network for human-object interaction detection, the neural network (600) comprising:

an image feature extraction sub-network (601) configured to receive an image to be detected (608) to output an image feature of the image to be detected;

a first target feature extraction sub-network (602) configured to receive the image feature to output a plurality of first target features;

a first interaction feature extraction sub-network (603) configured to receive the image feature to output one or more first interaction features;

a target detection sub-network (604) configured to receive the plurality of first target features to output target information of a plurality of predicted targets in the image to be detected;

a motion recognition sub-network (605) configured to receive the one or more first interaction features to output motion information of one or more predicted motions in the image to be detected;

a matching sub-network (606) configured to match the plurality of predicted targets with the one or more predicted motions; and

an updating sub-network (607) configured to: for each predicted motion of the one or more predicted motions, update human information of a corresponding human target based on target information of a predicted target matching the corresponding human target, and update object information of a corresponding object target based on target information of a predicted target matching the corresponding object target.

14. A computer-readable storage medium storing computer instructions, wherein the computer instructions are used to cause a computer to perform the method according to any one of claims 1 to 12.

15. A computer program product, comprising a computer program, wherein when the computer program is executed by a processor, the method according to any one of claims 1 to 12 is implemented.

Fig. 1

200

Obtain an image feature of an image to be detected — S201

Perform first target feature extraction on the image feature to obtain a plurality of first target features — S202

Perform first interaction feature extraction on the image feature to obtain one or more first interaction features — S203

Process the plurality of first target features to obtain target information of a plurality of detected targets in the image to be detected — S204

Process the one or more first interaction features to obtain motion information of one or more motions in the image to be detected, human information of a human target corresponding to each of the one or more motions, and object information of an object target corresponding to each motion — S205

Match the plurality of detected targets with the one or more motions — S206

For each of the one or more motions, update human information of a corresponding human target based on target information of a detected target matching the corresponding human target, and update object information of a corresponding object target based on target information of a detected target matching the corresponding object target — S207

Fig. 2

300

| S301 |
| --- |
| Obtain an image feature of an image to be detected |

↓

| S302 |
| --- |
| Perform first target feature extraction on the image feature to obtain a plurality of first target features |

↓

| S303 |
| --- |
| Perform first interaction feature extraction on the image feature to obtain one or more first interaction features |

↓

| S304 |
| --- |
| Process the plurality of first target features to obtain target information of a plurality of detected targets in the image to be detected |

↓

| S305 |
| --- |
| Process the one or more first interaction features to obtain motion information of one or more motions in the image to be detected, human information of a human target corresponding to each of the one or more motions, and object information of an object target corresponding to each motion |

↓

| S306 |
| --- |
| Perform first human sub-feature embedding on each of the one or more first interaction features to obtain a corresponding first interaction-human sub-feature |

↓

| S307 |
| --- |
| Perform first object sub-feature embedding on each of the one or more first interaction features to obtain a corresponding first interaction-object sub-feature |

↓

| S308 |
| --- |
| For each first target feature, generate a first target-matching sub-feature corresponding to the first target feature |

↓

| S309 |
| --- |
| Match the plurality of detected targets with the one or more motions |

↓

| S310 |
| --- |
| For each of the one or more motions, update human information of a corresponding human target based on target information of a detected target matching the corresponding human target, and update object information of a corresponding object target based on target information of a detected target matching the corresponding object target |

Fig. 3

400

| Determine a first human target feature in a plurality of first target features based on a first interaction-human sub-feature of a first interaction feature corresponding to the first motion feature corresponding to a motion | S401 |

| Determine a first object target feature in the plurality of first target features based on a first interaction-object sub-feature of the first interaction feature corresponding to the first motion feature corresponding to the motion | S402 |

| Associate a detected target corresponding to the first human target feature with a human target corresponding to the motion, and associate a detected target corresponding to the first object target feature with an object target corresponding to the motion | S403 |

Fig. 4

500

Obtain a sample image and a real human-object interaction label of the sample image — S501

Input the sample image to an image feature extraction sub-network to obtain a sample image feature — S502

Input the sample image feature to a first target feature extraction sub-network to obtain a plurality of first target features — S503

Input the sample image feature to a first interaction feature extraction sub-network to obtain one or more first interaction features — S504

Input the plurality of first target features to a target detection sub-network — S505

Input the one or more first interaction features to a motion recognition sub-network — S506

Input a plurality of predicted targets and one or more predicted motions to a matching sub-network to obtain a matching result — S507

Input the matching result to an updating sub-network to obtain a predicted human-object interaction label — S508

Calculate a loss value based on the predicted human-object interaction label and the real human-object interaction label — S509

Adjust a parameter of a neural network based on the loss value — S510

Fig. 5

Fig. 6

700

701 Computing unit

702 ROM

703 RAM

704

705 I/O interface

706 Input unit

707 Output unit

708 Storage unit

709 Communication unit

Fig. 7